# EUROPEAN PATENT SPECIFICATION

(11) **EP 4 164 806 B1**
(45) Date of publication and mention of the grant of the patent: **28.02.2024**
(21) Application number: 22726509.7
(22) Date of filing: 02.05.2022
(51) Int. Cl.: B05B 3/04, B05B 3/16, A61C 17/02, A47L 15/42

(54) **NOZZLE FOR THE PRODUCTION OF A PULSATILE JET OF FLUID**
DÜSE ZUR ERZEUGUNG EINES PULSATILEN FLÜSSIGKEITSSTRAHLS
BUSE POUR LA PRODUCTION D'UN JET DE FLUIDE PULSATILE

(30) Priority: 07.05.2021 EP 21172887
(43) Date of publication of application: 19.04.2023
(73) Proprietor: CARVAMED SA, 1066 Epalinges (CH)
(72) Inventor: RUCHAT, Patrick, 1066 Epalinges (CH)
(74) Representative: ABREMA SA
(86) International application number: PCT/IB2022/054038
(87) International publication number: WO 2022/234432

(56) References cited:
- US-A- 3 004 719
- US-A- 4 098 461
- US-A- 5 444 879
- US-A- 6 003 534
- US-B1- 6 375 088
- US-B1- 6 997 400

## Description

### TECHNICAL FIELD

The present invention generally relates to a nozzle for the production of a pulsatile jet of fluid.

### BACKGROUND OF THE INVENTION

Examples of such nozzles are generally known in the art and are used for various purposes and applications.

Article titled "Design, development, and validation of concepts for generating passive pulsation in cooling nozzles", Enno Sabelberg et al., Case Studies in Thermal Engineering, Volume 7, March 2016, pages 103-108 (https://doi.org/10.1016/j.csite.2016.03.005) for instance discloses various concepts of a passive nozzle used for impinging jet cooling. All relevant nozzle concepts disclosed in this article generally share a same configuration and comprise a housing or shell with a nozzle inlet and multiple (namely, six) tube outlets acting as nozzle outlet. The housing is designed as a splittable shell which houses a passive pulsation generator module (PGM) that generally consists of a guide vane (stator) and a combined rotor and shutter element used to sequentially cover and obstruct orifices communicating with the multiple tube outlets, causing pulsation. The guide vane (stator) generates a swirl and provides a radial component for the inner flow of fluid onto the rotor. A shaft connects the rotor to the shutter element, which in effect rotates along with the rotor to form a single rotational element. Four different types of rotational elements are contemplated, namely, (i) an axial wheel, (ii) a radial wheel, (iii) a swirl body, and (iv) rotational spheres.

U.S. Patent No. US 6.375,088 B1 discloses a fluid delivery device with pulsating linear discharge. The device comprises a housing having an elongated chamber, a fluid inlet passage to the chamber, and a cylindrical rotor mounted in the chamber and comprising a plurality of grooves. The inlet passage comprises a first fluid injection channel through which the fluid enters the chamber and impinges upon the grooves in the rotor. The fluid thereby rotates the rotor and exits as a fluid pulse through a linear fluid discharge. The grooves in the rotor may be helical such that the pulse of fluid traverses the linear fluid discharge from one portion to another or sequences though a linearly aligned plurality of fluid exits that are distributed along a direction parallel to the rotation axis of the rotor.

U.S. Patent No. US 3,004,719 A discloses an apparatus for spraying viscous liquids, especially polymer solutions, with a two-fluid spray nozzle having a body member containing a main fluid channel and discharge aperture and a plurality of secondary fluid channels and discharge apertures arranged about the main fluid aperture in such a manner as to cause a plurality of secondary fluid streams to impinge upon the main fluid stream at substantially the same point. The viscous liquid is supplied through the main fluid channel and a separate stream of gas is supplied to the plurality of secondary fluid channels to impart a rotational flutter to the viscous liquid at the discharge aperture, causing it to disperse into discrete droplets. In certain embodiments, a turbine wheel is provided that is driven into rotation by the stream of gas, which turbine wheel is coupled to a finger that is pivotally mounted about the same rotation axis as the turbine wheel and is designed to sequentially close the gas discharge ports in rapid succession to impart the rotational flutter to the viscous liquid.

There remains a need for an improved solution.

### SUMMARY OF THE INVENTION

A general aim of the invention is to provide an improved nozzle suitable for the production of a pulsatile jet of fluid.

More specifically, an aim of the present invention is to provide such a solution that can adequately be operated in a passive manner, namely, using the incoming supply of fluid as the sole source of energy for generating the desired pulsatile jet of fluid.

A further aim of the invention is to provide such a solution that is reasonably simple and cost-efficient to implement.

Another aim of the invention is to provide such as a solution that is both robust and reliable.

Yet another aim of the invention is to provide such a solution that can especially be used for suitably carrying removal of residues adhering on surfaces, be it for sanitary or hygienic purposes or other purposes such as surgical, medical, dental or veterinary purposes.

These aims are achieved thanks to the solution defined in the claims.

There is accordingly provided a nozzle, the features of which are recited in claim 1, namely, a nozzle with a nozzle inlet and a nozzle outlet, comprising:
- a shell;
- a rotor element located inside the shell and configured to be driven into rotation about a rotation axis upon being subjected to the action of a fluid flow entering the nozzle inlet and circulating through the nozzle towards the nozzle outlet; and
- a stationary splitter element located inside the shell, downstream of the rotor element, along the passage of the fluid flow.

According to the invention, the rotation axis of the rotor element coincides with a main direction along which the fluid flow projects from the nozzle outlet and the rotor element comprises a plurality of peripheral helical grooves configured to permit passage of the fluid flow and cause rotation of the rotor element about the rotation axis. In addition, the splitter element comprises a plurality of splitter openings communicating with a downstream end of the plurality of peripheral helical grooves of the rotor element to cause splitting and modulation of the fluid flow as a function of rotation of the rotor element with respect to the stationary splitter element. Furthermore, the nozzle further comprises flow conditioning elements located inside the shell, downstream of the splitter openings, and configured to cause recombination of the fluid flow, split and modulated by the splitter element, into a pulsatile jet of fluid projecting from the nozzle outlet along the main direction that coincides with the rotation axis of the rotor element.

According to the invention, the flow conditioning elements are further configured to impart a three-dimensional spiralling effect to the pulsatile jet of fluid projecting from the nozzle outlet.

Preferentially, a rear surface of the rotor element acts as obturator for the splitter openings depending on a rotational position of the rotor element with respect to the splitter element. The rear surface of the rotor may especially be a substantially flat surface.

In accordance with a preferred embodiment of the invention, the flow conditioning elements include a plurality of outlet conduits and each splitter opening opens into a corresponding one of the outlet conduits.

The outlet conduits may especially open in an outlet surface of the nozzle and be arranged to produce converging, modulated jets of fluid at the nozzle outlet that recombine to form the pulsatile jet of fluid downstream of the nozzle outlet. In that context, the outlet surface is preferably a concave surface.

In accordance with a preferred variant, the outlet conduits form an integral part of the splitter element.

In accordance with a further aspect of the invention, the shell may include a front shell element comprising the nozzle inlet and a rear shell element comprising the nozzle outlet. In this context, the splitter element preferably forms an integral part of the rear shell element.

In accordance with another embodiment of the invention, the flow conditioning elements include a plurality of turning vanes and a corresponding one of the turning vanes is provided downstream of each splitter opening. In this context, the turning vanes may be arranged to cause recombination of the fluid flow, split and modulated by the splitter element, upstream of the nozzle outlet.

In accordance with a preferred variant, the turning vanes form an integral part of the splitter element.

In accordance with a further variant, the splitter element is distinct from the shell and secured therein to remain stationary.

The rotor element may advantageously be rotatably supported onto the splitter element.

In accordance with a further embodiment, the plurality of peripheral helical grooves consists of three peripheral helical grooves distributed evenly about a circumference of the rotor element and the plurality of splitter openings consists of two diametrically opposed splitter openings.

By way of preference, the nozzle inlet and outlets include inlet and outlet apertures that are aligned along or distributed about an axis coinciding substantially with the rotation axis of the rotor element.

In accordance with a particularly preferred embodiment, an outer peripheral surface of the rotor element is delineated by a generally conical or ogival surface of revolution.

Also claimed is a device designed to produce a pulsatile jet of fluid, comprising a fluid supply coupled to the nozzle inlet of a nozzle in accordance with the invention. Possible applications of such a device include application of the device as a surgical, medical, dental or veterinary instrument, such as a hydropulsator for dental cleaning and/or treatment or a cleaning device to clean wounds using e.g. a sterile saline solution. Other applications may include application of the device as a sanitary or hygiene instrument, such as a handheld shower head or integrated shower head for bidet toilets, or as cleaning nozzles for e.g. dishwashers.

Further advantageous embodiments of the invention form the subject-matter of the dependent claims and are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figures 1A and 1B are perspective views of a nozzle in accordance with a preferred embodiment of the invention depicted from two different viewing angles, respectively showing a nozzle inlet and nozzle outlet;
Figure 1C is a longitudinal side view of the nozzle of Figures 1A-B;
Figure 1D is a front view of the nozzle of Figures 1A-C showing the nozzle inlet;
Figure 1E is a cross-sectional view of the nozzle of Figures 1A-D taken along sectional plane A-A shown in Figure 1D;
Figure 2A is an exploded, perspective view of the nozzle of Figures 1A-E showing individual constituents of the nozzle including a front shell element, a rotor element, and a combined splitter and rear shell element;
Figure 2B is an exploded, longitudinal side view of the nozzle of Figures 1A-E likewise showing the front shell element, the rotor element, and the combined splitter and rear shell element;
Figure 3A is a perspective view of the rotor element of Figures 2A-B;
Figure 3B is a front view of the rotor element of Figure 3A;
Figure 3C is a rear view of the rotor element of Figures 3A-B;
Figure 3D is a longitudinal side view of the rotor element of Figures 3A-C;
Figure 4A is a front view of the combined splitter and rear shell element of Figures 2A-B;
Figure 4B is a cross-sectional view of the combined splitter and rear shell element of Figure 4A taken along sectional plane B-B shown in Figure 4A;
Figure 4C is a rear view of the combined splitter and rear shell element of Figures 4A-B;
Figures 4D and 4E are perspective views of the combined splitter and rear shell element of Figures 4A-C depicted from a front side and rear side, respectively, highlighting a particular configuration of outlet conduits forming part of the combined splitter and rear shell element;
Figure 5A is a longitudinal side view of a nozzle in accordance with another embodiment of the invention, with half of a shell of the nozzle being omitted to reveal a rotor element and a splitter element located therein;
Figure 5B is a front view of the nozzle of Figures 5A, shown from the nozzle inlet side, with half of the shell being likewise omitted for the sake of illustration;
Figure 5C is a rear view of the nozzle of Figures 5A-B, shown from the nozzle outlet side, with half of the shell being once again omitted for the sake of illustration; and
Figures 6A and 6B are exploded, partial perspective views of the nozzle of Figures 5A-C depicted from two different viewing angles, respectively showing the nozzle inlet and the nozzle outlet, with half of the shell being omitted.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein.

As described herein, when two or more parts or components are described as being connected, attached, secured or coupled to one another, they can be so connected, attached, secured or coupled directly to each other or through one or more intermediary parts.

Embodiments of the nozzle will especially be described hereinafter in the particular context of a use thereof for producing a jet of water for sanitary or hygienic purposes e.g. in bidet toilets or as a handheld shower head. The nozzle of the invention may however serve a large variety of purposes and uses, including but not limited to applications for surgical, medical, dental or veterinary purpose. In that regard, fluids other than water could be contemplated, such as e.g. a sterile saline solution. In other embodiments, the fluid could be air or any other gaseous composition.

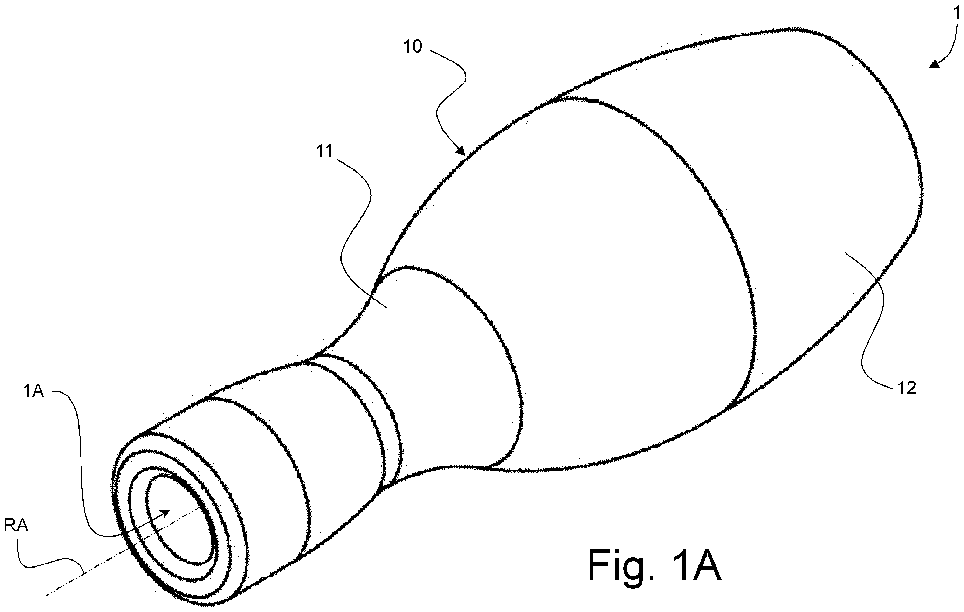

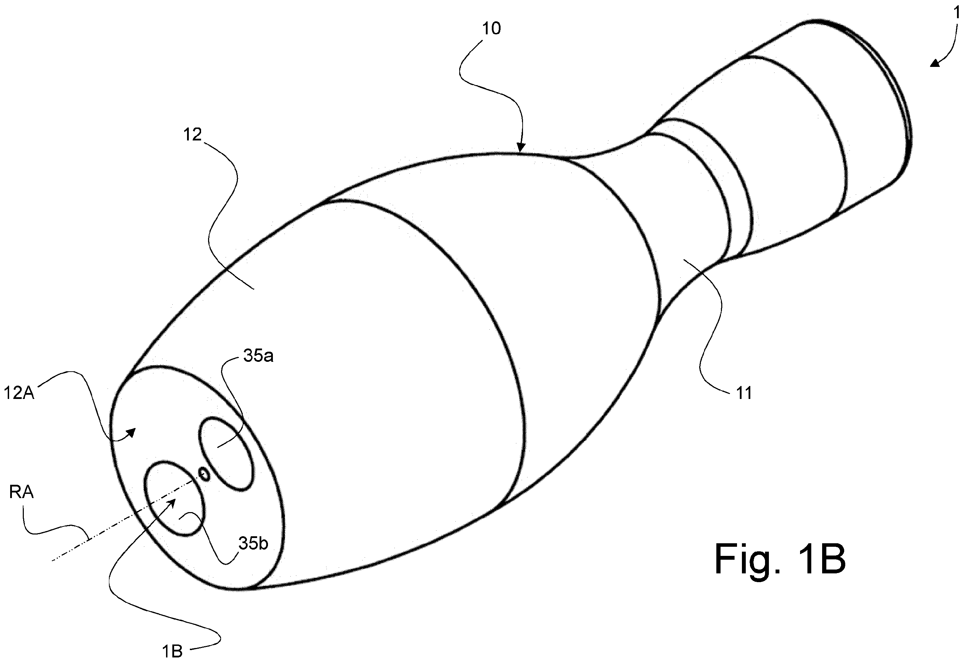

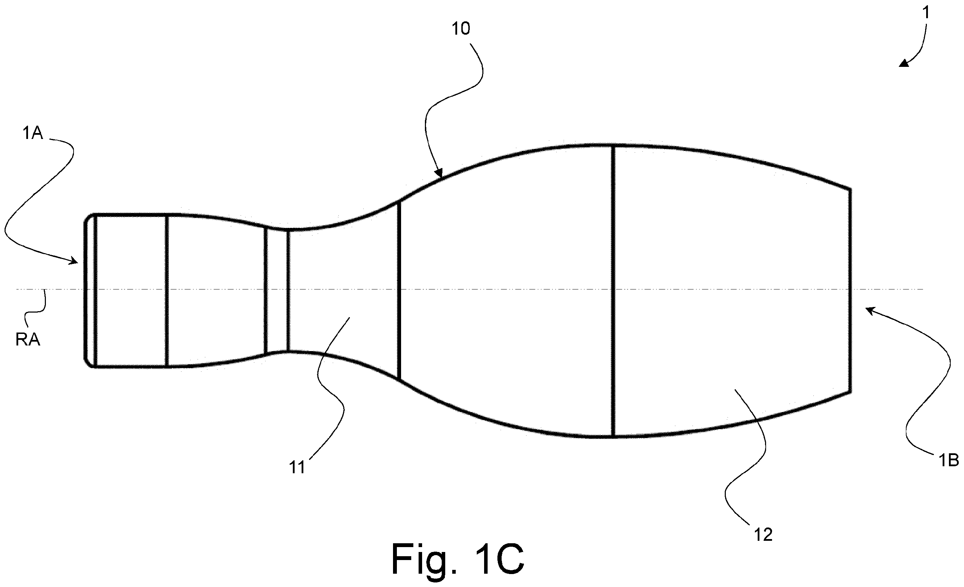

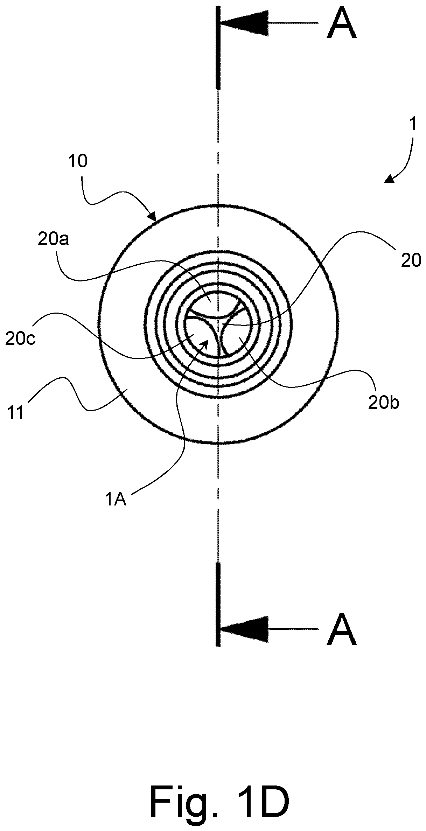

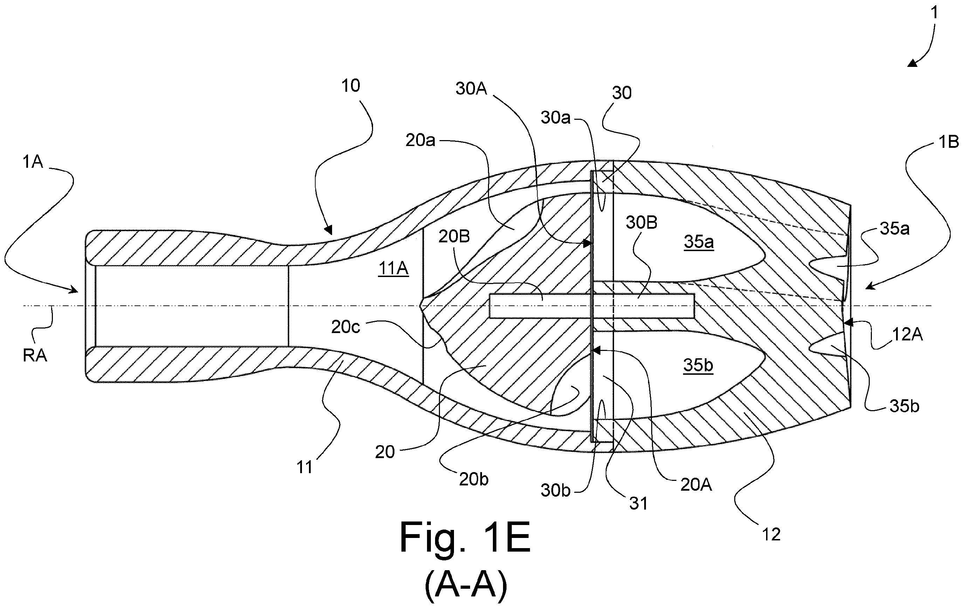

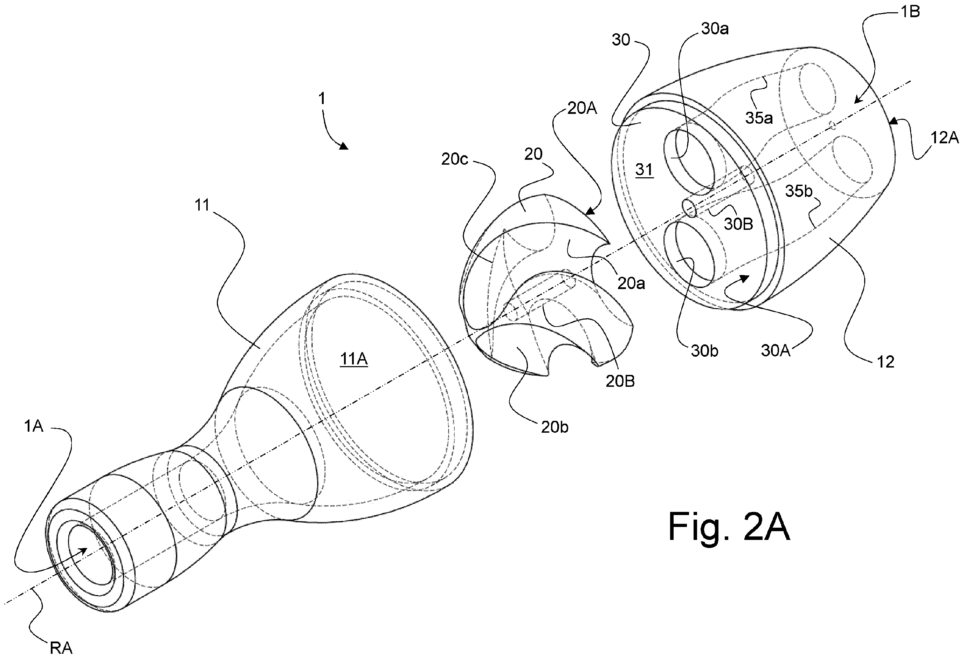

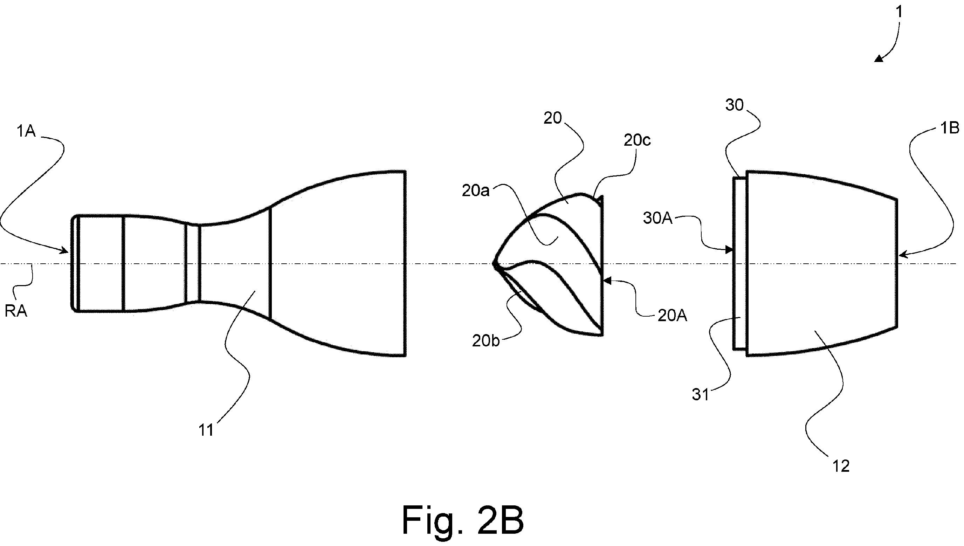

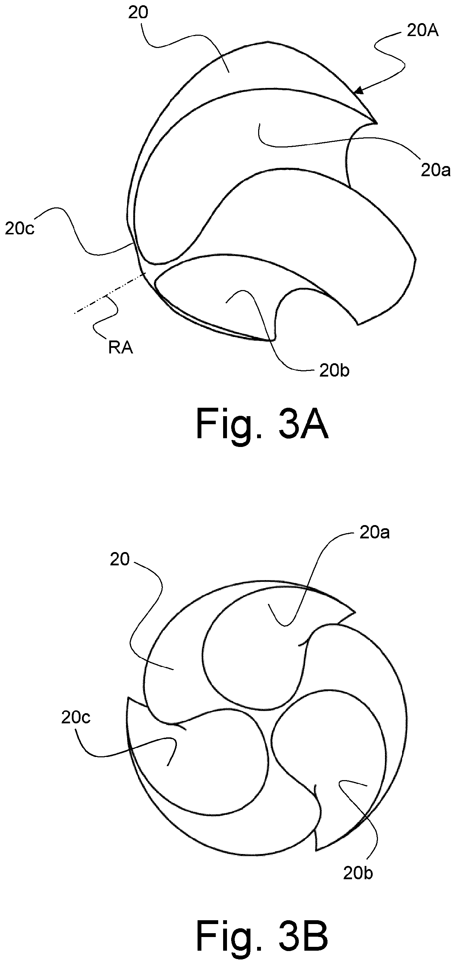

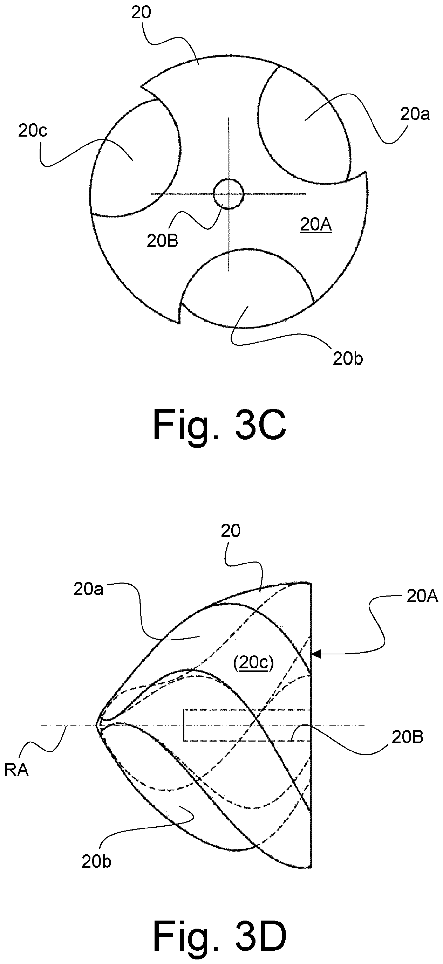

Figures 1A-E to 4A-E are illustrative of a first, preferred embodiment of the invention. More specifically, there is shown a nozzle, generally identified by reference numeral 1, with a nozzle inlet 1A having a single inlet aperture (visible in Figures 1A, 1C-E and 2A-B) and a nozzle outlet 1B having a pair of outlet apertures (visible in Figures 1B-C, 1E and 2A-B). In the illustrated embodiment, the inlet aperture acting as nozzle inlet 1A and the pair of outlet apertures acting as nozzle outlet 1B are advantageously aligned along, respectively distributed about a same axis, identified by reference sign RA. More specifically, nozzle 1 exhibits an essentially elongated shape, with the nozzle inlet 1A and nozzle outlet 1B being provided at two longitudinal ends of the nozzle 1. In operation, the nozzle inlet 1A is coupled to an adequate fluid supply (not shown), such as a water supply, using e.g. a flexible tubing or the like. The nozzle 1 is configured so as to allow fluid to flow from the nozzle inlet 1A, through the nozzle 1 and exit at the nozzle outlet 1B, namely, as a pulsatile jet of fluid projecting from the nozzle outlet 1B along a main direction that coincides with axis RA.

As this will become apparent from reading the following description, the pulsatile jet of fluid is produced passively thanks to a number of elements located inside a shell 10 of the nozzle 1 that interact with the fluid flow, which elements are specifically designed to turn the incoming fluid flow entering the nozzle 1A into the pulsatile jet of fluid projecting from the nozzle outlet 1B.

More precisely, as shown e.g. in Figure 1E and 2A-B, nozzle 1 comprises a rotor element 20 and a stationary splitter element 30 that are located one after the other inside the shell 10, along the passage of the fluid flow. Rotor element 20 is configured to be driven into rotation about a rotation axis RA upon being subjected to the action of the fluid flow entering the nozzle inlet 1A and circulating through the nozzle 1. In the illustrated example, one will appreciate that the axis along or about which the single inlet aperture acting as nozzle inlet 1A and the pair of outlet apertures acting as nozzle outlet 1B are respectively aligned and distributed coincides with the rotation axis RA of the rotor element 20. The rotor element 20 is positioned in front of and allowed to rotate inside the shell 10 with respect to the stationary splitter element 30.

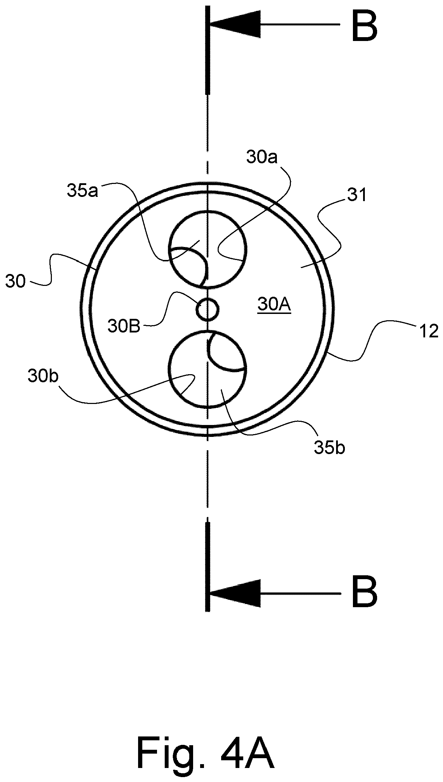

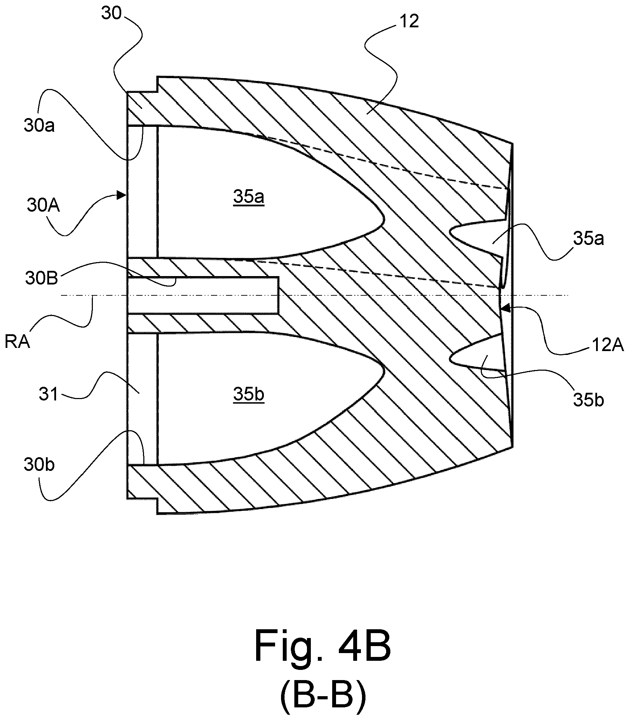

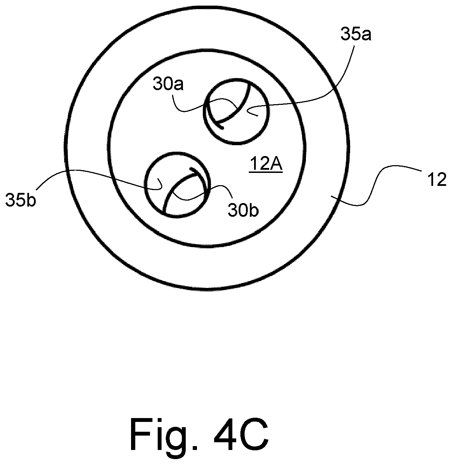

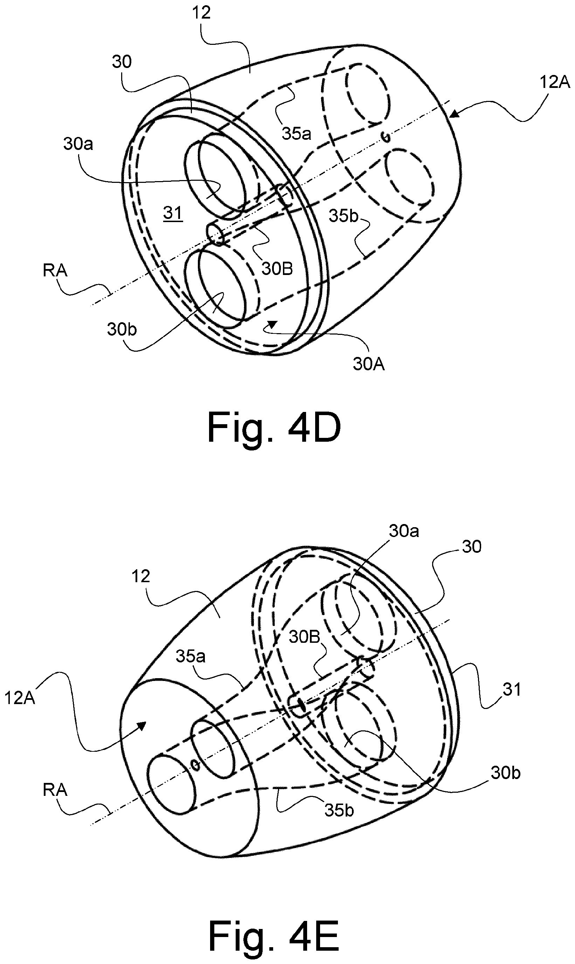

In the illustrated embodiment, the shell 10 advantageously includes a front shell element 11 (comprising the aforementioned nozzle inlet 1A) and a rear shell element 12 (comprising the aforementioned nozzle outlet 1B) that are assembled together to form the shell 10. As shown in Figures 1E and 2A, front shell element 11 includes an inner cavity 11A that is configured and dimensioned to receive the rotor element 20 and allow it to rotate under the action of the fluid flow. Stationary splitter element 30 here advantageously forms an integral part of the rear shell element 12 (see also Figures 4A-E) but may alternatively be designed as a separate element housed inside the rear shell element 12 and secured thereto to remain stationary. In the illustrated example, splitter element 30 and rear shell element 12 in effect form a combined, integral splitter and rear shell element.

As shown in Figures 1E, 2A-B and 3A-D (see also Figure 1B where rotor element 20 is partly visible), rotor element 20 comprises a plurality of (namely, three) peripheral helical grooves 20a, 20b, 20c that are configured to permit passage of the fluid flow and cause rotation of the rotor element 20 about its rotation axis RA. In the illustrated example, peripheral helical grooves 20a, 20b, 20c are evenly distributed about the circumference of the rotor element, namely, at 120° one from the other. Each peripheral helical groove 20a, 20b, 20c here exhibits a substantially hemi-circular groove profile but other groove profiles could be contemplated.

In accordance with this preferred embodiment of the invention, one may appreciate that the outer peripheral surface of the rotor element 20 is delineated by a generally ogival surface of revolution. The pointed end of the rotor element 20 is oriented towards the nozzle inlet 1A so that fluid flows around the rotor element 20 and through the peripheral helical grooves 20a, 20b, 20c, driving rotor element 20 into rotation in the process. In the illustrated embodiment, the rear surface 20A of rotor element 20 is substantially flat and faces the front surface 30A of the stationary splitter element 30, which front surface 30A is likewise substantially flat. By way of preference, rotor element 20 is rotatably supported onto the splitter element 30. Such rotatable support may be realized in a variety of different ways. In the illustrated embodiment, rotor element 20 and splitter element 30 both include a blind hole 20B, resp. 30B, configured and dimensioned to receive a shaft (not shown) providing rotatable support of the rotor element 20 onto the splitter element 30. Rotatable support may be ensured by a simple plain bearing (e.g. through direct interaction of the shaft with one or the other of the relevant blind holes 20B, 30B) or by any other adequate means, including e.g. ball bearings.

As shown in Figures 1E, 2A-B and 4A-E, splitter element 30 comprises a plurality of (namely, two) splitter openings 30a, 30b communicating with a downstream end of the plurality of peripheral helical grooves 20a, 20b, 20c of the rotor element 20 to cause splitting and modulation of the fluid flow as a function of rotation of the rotor element 20 with respect to the stationary splitter element 30. In the illustrated example, splitter openings 30a, 30b are in effect circular openings formed in a front portion 31 of splitter element 30, in diametrically opposed positions. These openings 30a, 30b are dimensioned and positioned to communicate with the relevant open portions on the rear surface 20A of the rotor element 20 that coincide with the downstream end of the peripheral helical grooves 20a, 20b, 20c, the rear surface 20A selectively acting as obturator for the splitter openings 30a, 30b depending on the rotational position of the rotor element 20 with respect to the splitter element 30.

Fluid flow is in effect split between the splitter openings 30a, 30b as a function of the rotational position of the rotor element 20 with respect to the splitter element 30 and the amount of fluid allowed to flow through each splitter opening 30a, 30b is modulated as a function of such rotational position. One will appreciate that such splitting and modulation will depend in particular on the relevant numbers, positions and dimensions of the peripheral helical grooves on the rotor element 20 and of the splitter openings on the splitter element 30. In the illustrated embodiment, the amount of fluid allowed to enter each splitter opening 30a, 30b is repeatedly modulated between a low value and a high value, with repeating modulation cycles each corresponding to a relative angular displacement of the rotor element 20 of 120° with respect to the splitter element 30 (corresponding to the relevant angle separating the peripheral helical grooves 20a, 20b, 20c). Furthermore, modulation of the amount of fluid allowed to enter the first splitter opening 30a is out of phase compared to modulation of the amount of fluid allowed to enter the second splitter opening 30b, owing to the fact that the angle separating the splitter openings 30a, 30b is of 180° in the present instance. In the illustrated example, the phase difference corresponds to a relative angular displacement of the rotor element 20 of 60° with respect to the splitter element 30. In other words, fluid is allowed to flow through the splitter openings 30a, 30b in an alternate manner.

As also shown in Figures 1B, 1E, 2A and 4A-E, nozzle 1 further comprises flow conditioning elements located inside the shell 10, downstream of the splitter openings 30a, 30b. These flow conditioning elements are configured to cause recombination of the fluid flow, split and modulated by the splitter element 30, into a pulsatile jet of fluid projecting from the nozzle outlet 1B along the main direction that coincides with the rotation axis RA of the rotor element 20. More specifically, in the illustrated embodiment, the flow conditioning elements include a plurality of (namely, two) outlet conduits 35a, 35b associated to the splitter openings 30a, 30b. That is, each splitter opening 30a, 30b opens into a corresponding one of the outlet conduits 35a, 35b, namely, splitter opening 30a opens into outlet conduit 35a, while splitter opening 30b opens into outlet conduit 35b.

In the illustrated example, outlet conduits 35a, 35b advantageously form an integral part of the splitter element 30 (and of the rear shell element 12), each outlet conduit 35a, 35b extending from the associated splitter opening 30a, resp. 30b, to the rear end of the nozzle 1. More specifically, outlet conduits 35a, 35b open in an outlet surface 12A (see Figures 1B, 1E, 2A and 4B-E), which outlet surface is concavely shaped as shown. Outlet conduits 35a, 35b are here arranged to produce converging, modulated jets of fluid at the nozzle outlet 1B that recombine to form the pulsatile jet of fluid downstream of the nozzle outlet 1B. This is made possible thanks to the aforementioned splitting and modulation of the fluid flow by the splitter element 30, causing fluid to be fed alternately into the outlet conduits 35a, 35b to produce two, out-of-phase, modulated jets of fluid that recombine downstream of the nozzle outlet 1B. The angle of convergence of the two modulated jets of fluid exiting the outlet conduits 35a, 35b is advantageously of the order of a few degrees.

As further shown in Figures 2A and 4A-E, the outlet conduits 35a, 35b advantageously have a twisted configuration, which imparts a three-dimensional spiralling effect (or rotational spin) to the pulsatile jet of fluid. Tests carried by the Applicant using the nozzle 1 of Figures 1A-E to 4A-E have demonstrated superior ability to clean surfaces from residues, which first embodiment accordingly constitutes a particularly advantageous embodiment of the invention for applications making use of the pulsatile jet of fluid as a cleaning medium.

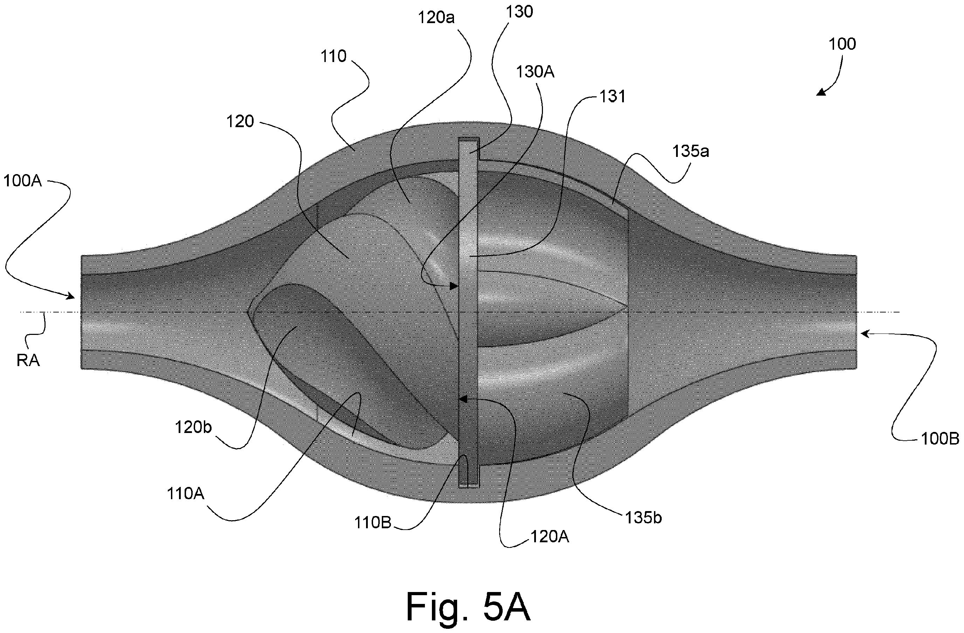

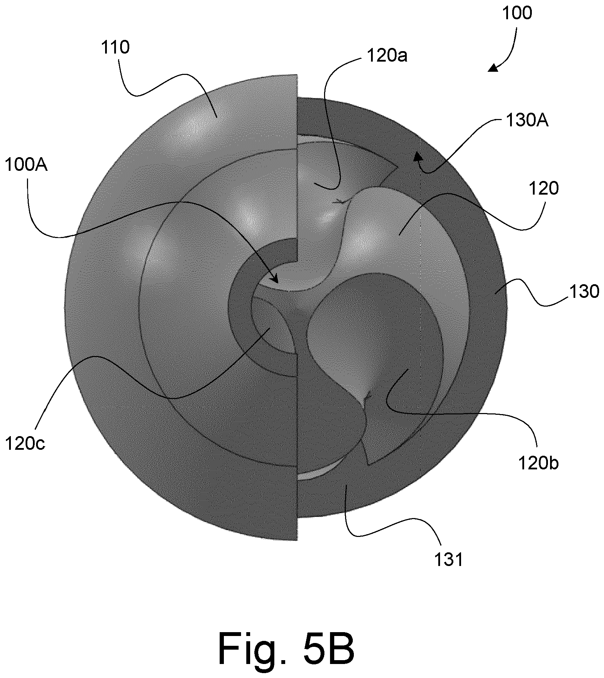

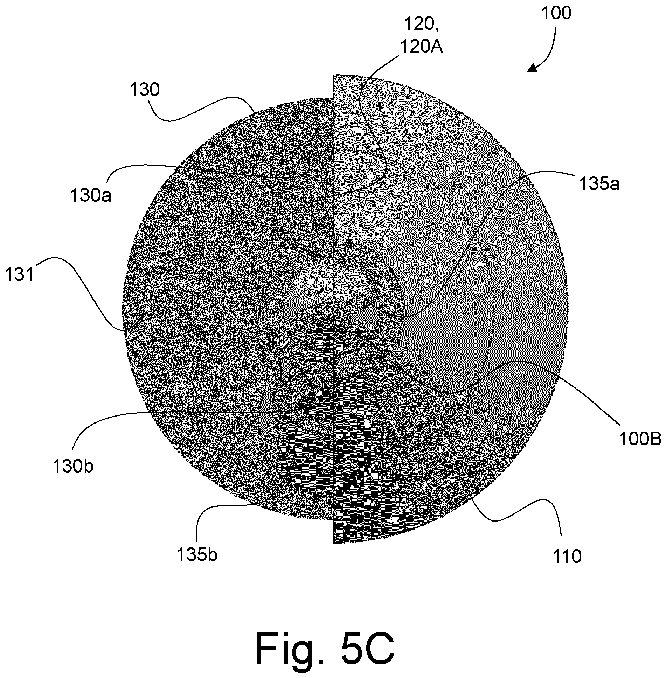

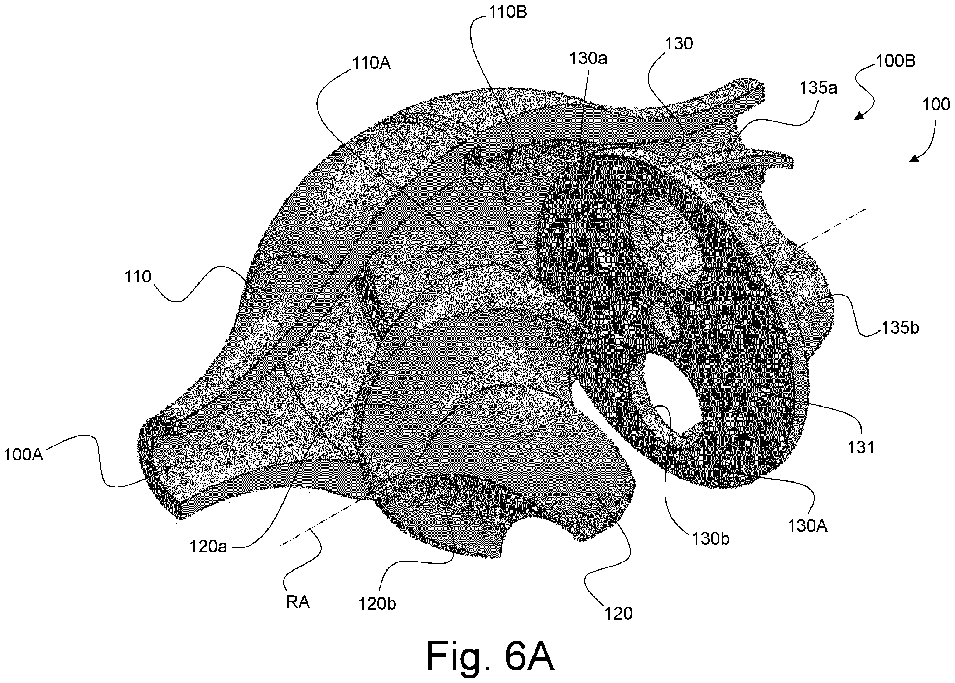

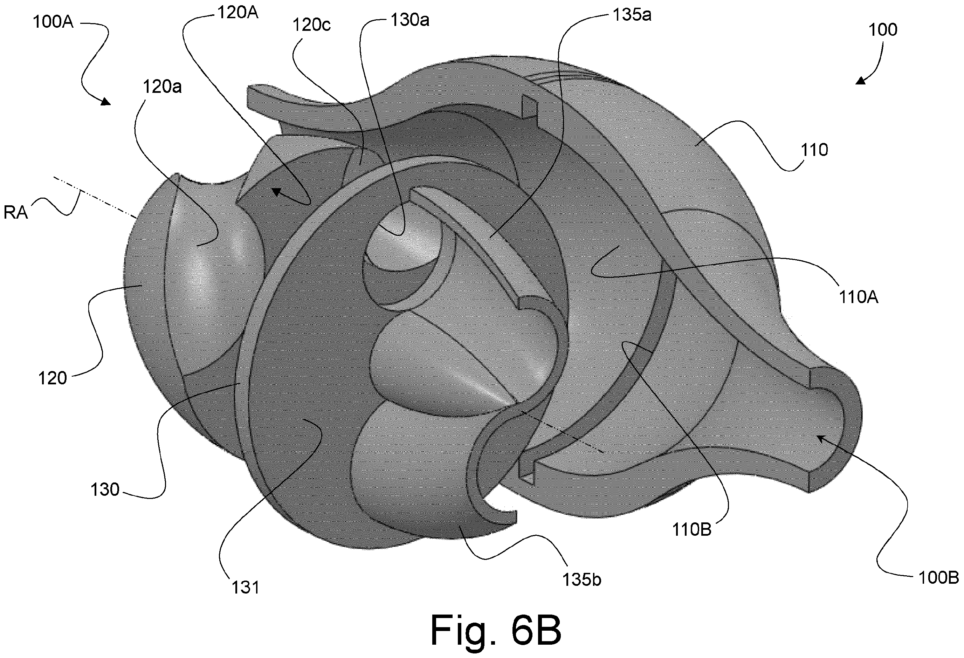

Figures 5A-C and 6A-B are illustrative of a second embodiment of the invention. More specifically, there is shown a nozzle, generally identified by reference numeral 100, with a nozzle inlet 100A having a single inlet aperture (visible in Figures 5A-B and 6A) and a nozzle outlet 100B likewise having a single outlet aperture (visible in Figures 5A, 5C and 6B). In a manner similar to the first embodiment described previously, the inlet aperture acting as nozzle inlet 100A and the outlet aperture acting as nozzle outlet 100B are likewise advantageously aligned along a same axis which coincides with the rotation axis RA of the rotor element, designated by reference numeral 120. Nozzle 100 once again exhibits an essentially elongated shape, here with a central bulged portion, with the nozzle inlet 100A and nozzle outlet 100B being provided at two longitudinal ends of the nozzle 100. In operation, the nozzle inlet 100A is likewise coupled to an adequate fluid supply (not shown), nozzle 100 being configured so as to allow fluid to flow from the nozzle inlet 100A, through the nozzle 100 and exit at the nozzle outlet 100B as a pulsatile jet of fluid projecting from the nozzle outlet 100B along a main direction that coincides with the rotation axis RA of the rotor element 120.

Nozzle 100 likewise includes a shell 110 (one half of which being omitted in the illustrations of Figures 5A-C and 6A-B for the sake illustration) housing the rotor element 120 and associated stationary splitter element, designated by reference numeral 130. More specifically, shell 110 includes a bulged inner cavity 110A that is here configured and dimensioned to receive not only the rotor element 120 but also the splitter element 130. The front portion of the splitter element 130 is here shaped as an essentially circular splitter plate 131 that is held and secured into a corresponding inner peripheral groove 110B formed inside the shell 110. One will appreciate that, in contrast to the first embodiment described previously, splitter element 130 does not form an integral part of the shell 110 but is rather distinct from the shell 110 and secured therein to remain stationary.

Rotor element 120 is basically similar to rotor element 20 described previously. The outer peripheral surface thereof is once again delineated by a generally ogival surface of revolution, with the pointed end of the rotor element 120 being oriented towards the nozzle inlet 100A so that fluid flows around the rotor element 120 and through a plurality of (namely, three) peripheral helical grooves 120a, 120b, 120c, driving rotor element 120 into rotation in the process. The rear surface 120A of rotor element 120 faces the front surface 130A of the splitter element 130 in a manner similar to the first embodiment described above to likewise selectively act as obturator for the splitter openings provided on the splitter element 130, depending on the rotational position of the rotor element 120 with respect to the splitter element 130. Rotor element 120 is likewise advantageously supported onto the splitter element 130 by means of suitable bearing arrangement (not shown).

In a manner similar to the first embodiment described previously, splitter element 130 comprises a plurality of (namely, two) splitter openings 130a, 130b (visible in Figures 5C and 6A-B) communicating with a downstream end of the plurality of peripheral helical grooves 120a, 120b, 120c of the rotor element 120 to cause splitting and modulation of the fluid flow as a function of rotation of the rotor element 120 with respect to the stationary splitter element 130. Splitting and modulation of fluid flow occurs in the same manner as previously described in connection with the first embodiment.

Nozzle 100 likewise further comprises flow conditioning elements located inside the shell 110, downstream of the splitter openings 130a, 130b, which flow conditioning elements are configured to cause recombination of the fluid flow, split and modulated by the splitter element 130, into a pulsatile jet of fluid projecting from the nozzle outlet 100B along the main direction that coincides with the rotation axis RA of the rotor element 120. More specifically, in accordance with this second embodiment, the flow conditioning elements include a plurality of (namely, two) turning vanes 135a, 135b associated to the splitter openings 130a, 130b. That is, a corresponding one of the turning vanes 135a, 135b is provided downstream of each splitter opening 130a, 130b, namely, turning vane 135a is provided downstream of splitter opening 130a, while turning vane 135b is provided downstream of splitter opening 130b.

In the illustrated example, turning vanes 135a, 135b advantageously form an integral part of the splitter element 130. Turning vanes 135a, 135b are here arranged to cause recombination of the fluid flow, split and modulated by the splitter element 130, upstream of the nozzle outlet 100B to form the desired pulsatile jet of fluid. This is once again made possible thanks to the aforementioned splitting and modulation of the fluid flow by the splitter element 130, causing fluid to be fed alternately to the turning vanes 135a, 135b to produce two, out-of-phase, modulated jets of fluid that recombine, here upstream of the nozzle outlet 100B.

By appropriately shaping the turning vanes 135a, 135b, a three-dimensional spiralling effect can likewise be imparted to the pulsatile jet of fluid projecting from the nozzle outlet 100B.

The nozzle of the invention may be made of any suitable materials. With respect to nozzles that are intended to be used for sanitary or hygienic purposes, suitable plastic materials may especially come into consideration. Part or all of the nozzle components could however be formed in other materials, including but not limited to stainless steel or aluminium.

The nozzle of the invention may be incorporated into any suitable device generally comprising a fluid supply coupled to the nozzle inlet of the nozzle of the invention. In that regard, the nozzle inlet could in particular be coupled to the fluid supply via a valve (such as a mechanically or electrically actuated valve) configured to selective close or open the connection to the fluid supply depending on operational requirements.

Various modifications and/or improvements may be made to the above-described embodiments without departing from the scope of the invention as defined by the appended claims.

For instance, the rotor element may exhibit any adequate shape and configuration. While a generally ogival surface of revolution is preferred, the outer peripheral surface of the rotor element could for instance be delineated by a generally conical surface of revolution. The number of peripheral helical grooves may in that respect differ from three. Likewise, the number of splitter openings provided on the splitter element may differ from two.

The exterior shape of the nozzle of the invention may further differ in practice from the elongated shape shown in Figures 1A-E to 4A-E or the bulged shape shown in Figures 5A-C to 6A-B. In effect, any adequate exterior shape could be contemplated.

Furthermore, one or multiple inlets could be contemplated as nozzle inlet in order to feed the nozzle with fluid and cause rotation of the rotor element.

In addition, it will be appreciated that the stationary splitter element may indifferently form an integral part of the shell or be distinct from the shell and secured therein to remain stationary.

Moreover, while the flow conditioning elements described in connection with the first and second embodiments discussed previously preferably form an integral part of the splitter element, such flow conditioning elements could potentially be formed onto a distinct element secured inside the shell in a fixed relationship with respect to the splitter element.

### LIST OF REFERENCE NUMERALS AND SIGNS USED THEREIN

- 1: nozzle (first embodiment)
- 1A: nozzle inlet
- 1B: nozzle outlet
- 10: shell
- 11: front shell element of shell 10 including nozzle inlet 1A
- 11A: inner cavity of front shell element 11
- 12: rear shell element of shell 10 including nozzle outlet 1B
- 12A: outlet surface of nozzle 1 / rear surface of rear shell element 12
- 20: rotor element located inside shell 10
- 20a-c: peripheral helical grooves of rotor element 20
- 20A: rear surface of rotor element 20
- 20B: blind hole
- 30: stationary splitter element located inside shell 10, downstream of rotor element 20
- 30a-b: splitter openings of splitter element 30
- 30A: front surface of splitter element 30 facing rear surface 20A of rotor element 20
- 30B: blind hole
- 31: front portion of splitter element 30 cooperating with rotor element 20 and provided with splitter openings 30a-b
- 35a-b: flow conditioning elements located inside shell 10, downstream of splitter openings 30a-b / outlet conduits communicating with splitter openings 30a-b
- 100: nozzle (second embodiment)
- 100A: nozzle inlet
- 100B: nozzle outlet
- 110: shell
- 110A: inner cavity of shell 110
- 110B: inner peripheral groove dimensioned to receive splitter plate 131
- 120: rotor element located inside shell 110
- 120a-c: peripheral helical grooves of rotor element 120
- 120A: rear surface of rotor element 120
- 130: stationary splitter element located inside shell 110, downstream of rotor element 120
- 130a-b: splitter openings of splitter element 130
- 130A: front surface of splitter element 130 facing rear surface 120A of rotor element 120
- 131: front portion of splitter element 130 cooperating with rotor element 120 and provided with splitter openings 130a-b / splitter plate
- 135a-b: flow conditioning elements located inside shell 110, downstream of splitter openings 130a-b / turning vanes associated with splitter openings 130a-b
- RA: rotation axis of rotor 20, respectively 120 (longitudinal axis of nozzle 1, respectively 100)

## Claims

1. A nozzle (1; 100) with a nozzle inlet (1A; 100A) and a nozzle outlet (1B; 100B), comprising:
- a shell (10; 110);
- a rotor element (20; 120) located inside the shell (10; 110) and configured to be driven into rotation about a rotation axis (RA) upon being subjected to the action of a fluid flow entering the nozzle inlet (1A; 100A) and circulating through the nozzle (1; 100) towards the nozzle outlet (1B; 100B); and
- a stationary splitter element (30; 130) located inside the shell (10; 110), downstream of the rotor element (20; 120), along the passage of the fluid flow,
wherein the rotation axis (RA) of the rotor element (20; 120) coincides with a main direction along which the fluid flow projects from the nozzle outlet (1B; 100B),
wherein the rotor element (20; 120) comprises a plurality of peripheral helical grooves (20a, 20b, 20c; 120a, 120b, 120c) configured to permit passage of the fluid flow and cause rotation of the rotor element (20; 120) about the rotation axis (RA),
wherein the splitter element (30; 130) comprises a plurality of splitter openings (30a, 30b; 130a, 130b) communicating with a downstream end of the plurality of peripheral helical grooves (20a, 20b, 20c; 120a, 120b, 120c) of the rotor element (20; 120) to cause splitting and modulation of the fluid flow as a function of rotation of the rotor element (20; 120) with respect to the stationary splitter element (30; 130),
wherein the nozzle (1; 100) further comprises flow conditioning elements (35a, 35b; 135a, 135b) located inside the shell (10; 110), downstream of the splitter openings (30a, 30b; 130a, 130b), and configured to cause recombination of the fluid flow, split and modulated by the splitter element (30; 130), into a pulsatile jet of fluid projecting from the nozzle outlet (1B; 100B) along the main direction that coincides with the rotation axis (RA) of the rotor element (20; 120),
and wherein the flow conditioning elements (35a, 35b; 135a, 135b) are further configured to impart a three-dimensional spiralling effect to the pulsatile jet of fluid projecting from the nozzle outlet (1B; 100B).

2. The nozzle (1; 100) according to claim 1, wherein a rear surface (20A; 120A) of the rotor element (20; 120) acts as obturator for the splitter openings (30a, 30b; 130a, 130b) depending on a rotational position of the rotor element (20; 120) with respect to the splitter element (30; 130),
and wherein the rear surface (20A; 120A) is preferably a substantially flat surface.

3. The nozzle (1) according to claim 1 or 2, wherein the flow conditioning elements include a plurality of outlet conduits (35a, 35b),
and wherein each splitter opening (30a, 30b) opens into a corresponding one of the outlet conduits (35a, 35b).

4. The nozzle (1) according to claim 3, wherein the outlet conduits (35a, 35b) open in an outlet surface (12A) of the nozzle (1) and are arranged to produce converging, modulated jets of fluid at the nozzle outlet (1B) that recombine to form the pulsatile jet of fluid downstream of the nozzle outlet (1B),
and wherein the outlet surface (12A) is preferably a concave surface.

5. The nozzle (1) according to claim 3 or 4, wherein the outlet conduits (35a, 35b) form an integral part of the splitter element (30).

6. The nozzle (1) according to any one of the preceding claims, wherein the shell (10) includes a front shell element (11) comprising the nozzle inlet (1A) and a rear shell element (12) comprising the nozzle outlet (1B).

7. The nozzle (1) according to claim 6, wherein the splitter element (30) forms an integral part of the rear shell element (12).

8. The nozzle (100) according to claim 1 or 2, wherein the flow conditioning elements include a plurality of turning vanes (135a, 135b),
wherein a corresponding one of the turning vanes (135a, 135b) is provided downstream of each splitter opening (130a, 130b),
and wherein the turning vanes (135a, 135b) are preferably arranged to cause recombination of the fluid flow, split and modulated by the splitter element (130), upstream of the nozzle outlet (100B).

9. The nozzle (100) according to claim 8, wherein the turning vanes (135a, 135b) form an integral part of the splitter element (130).

10. The nozzle (100) according to any one of claims 1 to 6, 8 and 9, wherein the splitter element (130) is distinct from the shell (110) and secured therein to remain stationary.

11. The nozzle (1; 100) according to any one of the preceding claims, wherein the rotor element (20; 120) is rotatably supported onto the splitter element (30; 130).

12. The nozzle (1; 100) according to any one of the preceding claims, wherein the plurality of peripheral helical grooves (20a, 20b, 20c; 120a, 120b, 120c) consists of three peripheral helical grooves (20a, 20b, 20c; 120a, 120b, 120c) distributed evenly about a circumference of the rotor element (20; 120),
and wherein the plurality of splitter openings (30a, 30b; 130a, 130b) consists of two diametrically opposed splitter openings (30a, 30b; 130a, 130b).

13. The nozzle (1; 100) according to any one of the preceding claims, wherein the nozzle inlet and outlets (1A, 1B; 100A, 100B) include inlet and outlet apertures that are aligned along or distributed about an axis coinciding substantially with the rotation axis (RA) of the rotor element (30; 130).

14. The nozzle (1; 100) according to any one of the preceding claims, wherein an outer peripheral surface of the rotor element (20; 120) is delineated by a generally conical or ogival surface of revolution.

15. A device designed to produce a pulsatile jet of fluid, comprising a fluid supply coupled to the nozzle inlet (1A; 100A) of a nozzle (1; 100) in accordance with any one of the preceding claims.

## Patentansprüche

1. Eine Düse (1; 100) mit einem Düseneinlass (1A; 100A) und einem Düsenauslass (1B; 100B), umfassend:
- eine Hülle (10; 110);
- ein Rotorelement (20; 120), das sich innerhalb der Hülle (10; 110) befindet und konfiguriert ist, um, wenn es der Wirkung eines Flüssigkeitsstroms ausgesetzt wird, der in den Düseneinlass (1A; 100A) eintritt, in Drehung um eine Drehachse (RA) angetrieben zu werden und durch die Düse (1; 100) zu dem Düsenauslass (1B; 100B) hin zirkuliert; und
- ein stationäres Teilerelement (30; 130), das sich innerhalb der Hülle (10; 110), stromabwärts des Rotorelements (20; 120), entlang des Durchgangs des Flüssigkeitsstroms befindet,
wobei die Drehachse (RA) des Rotorelements (20; 120) mit einer Hauptrichtung zusammenfällt, entlang der der Flüssigkeitsstrom von dem Düsenauslass (1B; 100B) vorsteht,
wobei das Rotorelement (20; 120) eine Vielzahl von spiralförmigen Umfangsnuten (20a, 20b, 20c; 120a, 120b, 120c) umfasst, die konfiguriert sind, um den Durchgang des Flüssigkeitsstroms zu ermöglichen und die Drehung des Rotorelements (20; 120) um die Drehachse (RA) zu bewirken,
wobei das Teilerelement (30; 130) eine Vielzahl von Teileröffnungen (30a, 30b; 130a, 130b) umfasst, die mit einem stromabwärtigen Ende der Vielzahl von spiralförmigen Umfangsnuten (20a, 20b, 20c; 120a, 120b, 120c) des Rotorelements (20; 120) kommunizieren, um ein Teilen und eine Modulation des Flüssigkeitsstroms in Abhängigkeit von der Drehung des Rotorelements (20; 120) in Bezug auf das stationäre Teilerelement (30; 130) zu bewirken,
wobei die Düse (1; 100) ferner Stromkonditionierungselemente (35a, 35b; 135a, 135b) umfasst, die sich innerhalb der Hülle (10; 110), stromabwärts von den Teileröffnungen (30a, 30b; 130a, 130b) befinden und konfiguriert sind, um eine Rekombination des Flüssigkeitsstroms, der durch das Teilerelement (30; 130) geteilt und moduliert ist, in einen pulsatilen Flussigkeitsstrahl, der aus dem Düsenauslass (1B; 100B) entlang der Hauptrichtung vorsteht, die mit der Drehachse (RA) des Rotorelements (20; 120) zusammenfällt, zu bewirken,
und wobei die Stromkonditionierungselemente (35a, 35b; 135a, 135b) ferner konfiguriert sind, um einen dreidimensionalen Spiraleffekt auf den pulsatilen Flussigkeitsstrahl zu übertragen, der aus dem Düsenauslass (1B; 100B) vorsteht.

2. Die Düse (1; 100) nach Anspruch 1, wobei eine hintere Oberfläche (20A; 120A) des Rotorelements (20; 120) als Obturator für die Teileröffnungen (30a, 30b; 130a, 130b) wirkt, abhängig von einer Drehposition des Rotorelements (20; 120) in Bezug auf das Teilerelement (30; 130),
und wobei die hintere Oberfläche (20A; 120A) vorzugsweise eine im Wesentlichen flache Oberfläche ist.

3. Die Düse (1) nach Anspruch 1 oder 2, wobei die Stromkonditionierungselemente eine Vielzahl von Auslassleitungen (35a, 35b) einschließen,
und wobei jede Teileröffnung (30a, 30b) in eine entsprechende der Auslassleitungen (35a, 35b) mündet.

4. Die Düse (1) nach Anspruch 3, wobei die Auslassleitungen (35a, 35b) in einer Auslassoberfläche (12A) der Düse (1) münden und angeordnet sind, um konvergierte, modulierte Flussigkeitsstrahlen an dem Düsenauslass (1B) zu erzeugen, die sich rekombinieren, um den pulsatilen Flussigkeitsstrahl stromabwärts des Düsenauslasses (1B) zu bilden,
und wobei die Auslassoberfläche (12A) vorzugsweise eine konkave Oberfläche ist.

5. Die Düse (1) nach Anspruch 3 oder 4, wobei die Auslassleitungen (35a, 35b) einen integralen Teil des Teilerelements (30) bilden.

6. Die Düse (1) nach einem der vorstehenden Ansprüche, wobei die Hülle (10) ein vorderes Hüllenelement (11), umfassend den Düseneinlass (1A), und ein hinteres Hüllenelement (12), umfassend den Düsenauslass, (1B) einschließt.

7. Die Düse (1) nach Anspruch 6, wobei das Teilerelement (30) einen integralen Teil des hinteren Hüllenelements (12) bildet.

8. Die Düse (100) nach Anspruch 1 oder 2, wobei die Stromkonditionierungselemente eine Vielzahl von Umlenkblechen (135a, 135b) einschließen,
wobei ein entsprechendes der Umlenkbleche (135a, 135b) stromabwärts jeder Teileröffnung (130a, 130b) bereitgestellt ist,
und wobei die Umlenkbleche (135a, 135b) vorzugsweise angeordnet sind, um die Rekombination des Flüssigkeitsstroms, der durch das Teilerelement (130) geteilt und moduliert ist, stromaufwärts des Düsenauslasses (100B), zu bewirken.

9. Die Düse (100) nach Anspruch 8, wobei die Umlenkbleche (135a, 135b) einen integralen Teil des Teilerelements (130) bilden.

10. Die Düse (100) nach einem der Ansprüche 1 bis 6, 8 und 9, wobei das Teilerelement (130) von der Hülle (110) verschieden und darin befestigt ist, um stationär zu bleiben.

11. Die Düse (1; 100) nach einem der vorstehenden Ansprüche, wobei das Rotorelement (20; 120) auf dem Teilerelement (30; 130) drehbar gelagert ist.

12. Die Düse (1; 100) nach einem der vorstehenden Ansprüche, wobei die Vielzahl von spiralförmigen Umfangsnuten (20a, 20b, 20c; 120a, 120b, 120c) aus drei spiralförmigen Umfangsnuten (20a, 20b, 20c; 120a, 120b, 120c) bestehen, die um einen Umfang des Rotorelements (20; 120) gleichmäßig verteilt sind,
und wobei die Vielzahl von Teileröffnungen (30a, 30b; 130a, 130b) aus zwei diametral gegenüberliegenden Teileröffnungen (30a, 30b; 130a, 130b) bestehen.

13. Die Düse (1; 100) nach einem der vorstehenden Ansprüche, wobei der Düseneinlass und die Düsenauslässe (1A, 1B; 100A, 100B) Einlass- und Auslassöffnungen einschließen, die entlang einer Achse ausgerichtet oder um diese verteilt sind, die im Wesentlichen mit der Drehachse (RA) des Rotorelements (30; 130) zusammenfällt.

14. Die Düse (1; 100) nach einem der vorstehenden Ansprüche, wobei eine äußere Umfangsoberfläche des Rotorelements (20; 120) durch eine im Allgemeinen konische oder spitzovale Rotationsfläche abgegrenzt ist.

15. Eine Vorrichtung, die ausgelegt ist, um einen pulsatilen Flussigkeitsstrahl zu erzeugen, umfassend eine Flüssigkeitszufuhr, die mit dem Düseneinlass (1A; 100A) einer Düse (1; 100) nach einem der vorstehenden Ansprüche gekoppelt ist.

## Revendications

1. Une buse (1 ; 100) présentant une entrée de buse (1A ; 100A) et une sortie de buse (1B ; 100B), comprenant :
- une coque (10 ; 110) ;
- un élément rotor (20 ; 120) situé à l'intérieur de la coque (10 ; 110) et configuré afin d'être entraîné en rotation autour d'un axe de rotation (RA) lorsqu'il est soumis à l'action d'un écoulement de fluide entrant par l'entrée de buse (1A ; 100A) et circulant à travers la buse (1 ; 100) vers la sortie de buse (1B ; 100B) ; et
- un élément séparateur stationnaire (30 ; 130) situé à l'intérieur de la coque (10 ; 110), en aval de l'élément rotor (20 ; 120), le long du passage de l'écoulement de fluide,
dans laquelle l'axe de rotation (RA) de l'élément rotor (20 ; 120) coïncide avec une direction principale le long de laquelle l'écoulement de fluide se projette depuis la sortie de buse (1B ; 100B),
dans laquelle l'élément rotor (20 ; 120) comprend une pluralité de rainures hélicoïdales périphériques (20a, 20b, 20c ; 120a, 120b, 120c) configurées afin de permettre le passage de l'écoulement de fluide et causer la rotation de l'élément rotor (20 ; 120) autour de l'axe de rotation (RA),
dans laquelle l'élément séparateur (30; 130) comprend une pluralité d'ouvertures séparatrices (30a, 30b ; 130a, 130b) communiquant avec une extrémité aval de la pluralité de rainures hélicoïdales périphériques (20a, 20b, 20c ; 120a, 120b, 120c) de l'élément rotor (20 ; 120) afin de causer une séparation et une modulation de l'écoulement de fluide en fonction de la rotation de l'élément rotor (20 ; 120) par rapport à l'élément séparateur stationnaire (30 ; 130),
dans laquelle la buse (1; 100) comprend en outre des éléments de conditionnement d'écoulement (35a, 35b ; 135a, 135b) situés à l'intérieur de la coque (10 ; 110), en aval des ouvertures séparatrices (30a, 30b ; 130a, 130b), et configurés afin de causer une recombinaison de l'écoulement de fluide, divisé et modulé par l'élément séparateur (30 ; 130), en un jet de fluide pulsatile se projetant depuis la sortie de buse (1B ; 100B) le long de la direction principale qui coïncide avec l'axe de rotation (RA) de l'élément rotor (20 ; 120),
et dans laquelle les éléments de conditionnement d'écoulement (35a, 35b ; 135a, 135b) sont en outre configurés afin de conférer un effet en spirale tridimensionnel au jet de fluide pulsatile se projetant depuis la sortie de buse (1B ; 100B).

2. La buse (1 ; 100) selon la revendication 1, dans laquelle une surface arrière (20A ; 120A) de l'élément rotor (20 ; 120) agit comme obturateur pour les ouvertures séparatrices (30a, 30b ; 130a, 130b) en fonction d'une position en rotation de l'élément rotor (20 ; 120) par rapport à l'élément séparateur (30 ; 130),
et dans laquelle la surface arrière (20A ; 120A) est préférablement une surface sensiblement plane.

3. La buse (1) selon la revendication 1 ou 2, dans laquelle les éléments de conditionnement d'écoulement comportent une pluralité de conduits de sortie (35a, 35b),
et dans laquelle chaque ouverture séparatrice (30a, 30b) débouche dans un conduit correspondant des conduits de sortie (35a, 35b).

4. La buse (1) selon la revendication 3, dans laquelle les conduits de sortie (35a, 35b) débouchent dans une surface de sortie (12A) de la buse (1) et sont agencés afin de produire des jets de fluide convergents et modulés au niveau de la sortie de buse(1B) qui se recombinent afin de former le jet de fluide pulsatile en aval de la sortie de buse (1B),
et dans laquelle la surface de sortie (12A) est préférablement une surface concave.

5. La buse (1) selon la revendication 3 ou 4, dans laquelle les conduits de sortie (35a, 35b) font partie intégrante de l'élément séparateur (30).

6. La buse (1) selon l'une quelconque des revendications précédentes, dans laquelle la coque (10) comporte un élément de coque avant (11) comprenant l'entrée de buse (1A) et un élément de coque arrière (12) comprenant la sortie de buse (1B).

7. La buse (1) selon la revendication 6, dans laquelle l'élément séparateur (30) fait partie intégrante de l'élément de coque arrière (12).

8. La buse (100) selon la revendication 1 ou 2, dans laquelle les éléments de conditionnement d'écoulement comportent une pluralité d'aubes directrices (135a, 135b),
dans laquelle une aube directrice correspondante des aubes directrices (135a, 135b) est prévue en aval de chaque ouverture séparatrice (130a, 130b),
et dans laquelle les aubes directrices (135a, 135b) sont préférablement agencées afin de causer la recombinaison de l'écoulement de fluide, divisé et modulé par l'élément séparateur (130), en amont de la sortie de buse (100B).

9. La buse (100) selon la revendication8, dans laquelle les aubes directrices (135a, 135b) font partie intégrante de l'élément séparateur (130).

10. La buse (100) selon l'une quelconque des revendications 1 à 6, 8 et 9, dans laquelle l'élément séparateur (130) est distinct de la coque (110) et fixé à l'intérieur de celle-ci afin de rester stationnaire.

11. La buse (1; 100) selon l'une quelconque des revendications précédentes, dans laquelle l'élément rotor (20 ; 120) est supporté de manière rotative sur l'élément séparateur (30 ; 130).

12. La buse (1; 100) selon l'une quelconque des revendications précédentes, dans laquelle la pluralité de rainures hélicoïdales périphériques (20a, 20b, 20c ; 120a, 120b, 120c) est constituée de trois rainures hélicoïdales périphériques (20a, 20b, 20c ; 120a, 120b, 120c) réparties uniformément autour d'une circonférence de l'élément rotor (20 ; 120),
et dans laquelle la pluralité d'ouvertures séparatrices (30a, 30b ; 130a, 130b) est constituée de deux ouvertures séparatrices (30a, 30b ; 130a, 130b) diamétralement opposées.

13. La buse (1; 100) selon l'une quelconque des revendications précédentes, dans laquelle l'entrée et les sorties de buse (1A, 1B ; 100A, 100B) comportent des orifices d'entrée et de sortie qui sont alignés le long ou distribués autour d'un axe coïncidant sensiblement avec l'axe de rotation (RA) de l'élément rotor (30 ; 130).

14. La buse (1; 100) selon l'une quelconque des revendications précédentes, dans laquelle une surface périphérique externe de l'élément rotor (20 ; 120) est délimitée par une surface de révolution généralement conique ou ogivale.

15. Un dispositif conçu afin de produire un jet de fluide pulsatile, comprenant une alimentation en fluide couplée à l'entrée de buse (1A ; 100A) d'une buse (1 ; 100) selon l'une quelconque des revendications précédentes.
